Europäisches Patentamt

**European Patent Office**

Office européen des brevets

(19)

(11) Veröffentlichungsnummer: **0 067 164**
**B1**

(12) # EUROPÄISCHE PATENTSCHRIFT

(45) Veröffentlichungstag der Patentschrift:
**29.05.85**

(51) Int. Cl.⁴: **H 02 K 1/18**

(21) Anmeldenummer: **81902978.6**

(22) Anmeldetag: **31.10.81**

(86) Internationale Anmeldenummer:
**PCT/DE 81/00183**

(87) Internationale Veröffentlichungsnummer:
**WO 82/02288 (08.07.82 Gazette 82/17)**

(54) **ELEKTRISCHE MASCHINE, INSBESONDERE FÜR ANDREHVORRICHTUNGEN VON BRENNKRAFTMASCHINEN.**

(30) Priorität: **20.12.80 DE 3048337**

(43) Veröffentlichungstag der Anmeldung:
**22.12.82 Patentblatt 82/51**

(45) Bekanntmachung des Hinweises auf die Patenterteilung:
**29.05.85 Patentblatt 85/22**

(84) Benannte Vertragsstaaten:
**DE FR GB**

(56) Entgegenhaltungen:
**DE - A - 1 923 753**
**DE - A - 1 959 700**
**US - A - 3 258 622**
**US - A - 3 790 830**
**US - A - 4 071 794**

(73) Patentinhaber: **ROBERT BOSCH GMBH, Postfach 50,
D-7000 Stuttgart 1 (DE)**

(72) Erfinder: **RÜHLE, Walter, Blumhardtweg 1,
D-7015 Korntal (DE)**
Erfinder: **ZIMMERMANN, Kurt, Berliner Strasse 8,
D-7120 Bietigheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine elektrische Maschine, insbesondere für Andrehvorrichtungen von Brennkraftmaschinen, in deren Gehäuse gewölbte Permanentmagnete an der Innenwand anliegen und unter Ausnutzung des Gewölbeeffekts mittels mindestens eines an den Längsseiten zweier benachbarter Permanentmagnete anliegenden federnden Halteteils befestigt sind, das anschließend an den an den Längsseiten zweier benachbarter Permanentmagnete anliegenden federnden Halteabschnitt einen Abstandshalter hat, welcher sich an einem an einer Gehäusestirnseite angeordneten Teil abstützt und an den Stirnseiten zweier benachbarter Permanentmagnete federnd anliegende Vorsprünge hat, und die Permanentmagnete mit ihrer anderen Stirnseite an einem Anschlag im Gehäuse anliegen.

Eine Maschine dieser Art ist aus der DE-A-1 959 700 bekannt. Es handelt sich dabei um einen Kleinmotor mit nur einem Magnetpaar und einem federnden Halteteil bekannt, das auch einen Abstandshalter mit federnden Halteabschnitten zur axialen Lagefixierung aufweist. Das Halteteil wirkt jedoch mit aus dem Gehäuseblech herausgebogenen Lappen zur Lagefixierung der Magnete in Umfangsrichtung zusammen, die bei Andrehmotoren in nachteiliger Weise die elektromagnetische Wirkung des Polgehäuses mindern. Darüber hinaus ist das bekannte Halteteil nicht bei der lösbaren Befestigung der Lagerteile an den Gehäusestirnseiten mittels Zuganker verwendbar. Auch ist bei diesem Kleinmotor kein abgeschlossenes Gehäuse vorgesehen. Der Abstandshalter stützt sich lediglich an einem durch Verstemmen am Gehäuse unlösbar befestigten Steg ab. Die herausgebogenen Gehäuselappen und der Steg lassen in nachteiliger Weise Schmutz und Feuchtigkeit ungehindert in das Gehäuseinnere gelangen.

Außerdem ist aus der US-A-3 258 622 noch ein Kleinmotor mit einem einzigen Magnetpaar bekannt, bei dem keine axiale Lagefixierung der beiden Einzelmagnete sowie deren federnder Halteteile vorgesehen ist. Selbst die Sicherung der Magnete in ihrer Lage in Umfangsrichtung reicht nicht aus bei den zulässigen Fertigungstoleranzen für Permanentmagnete bei wirtschaftlicher Großmengenfertigung. Die die Lagerteile an den Gehäusestirnseiten haltenden Zuganker behindern nämlich die federnden Halteteile bei ihrer toleranzausgleichenden Federwirkung in Umfangsrichtung.

Bei einem anderen bekannten Kleinmotor mit einem einzigen Magnetpaar (siehe EP-A-0 017 524) sind am Gehäusedeckel aus Kunststoff zwei sich in Längsrichtung des Motors erstreckende Fortsätze angeformt, zwischen denen die beiden Einzelmagnete eingesetzt sind und mit ihren Stirnseiten an Abstandshaltern anliegen, welche ebenfalls am Gehäusedeckel angeformt sind. Mit der anderen Stirnseite liegen die bei den Einzelmagnete an Gehäuselappen an, die wiederum aus dem Gehäuseblech herausgebogen sind. Die Magnete sind bei diesem Kleinmotor weder federnd noch toleranzausgleichend in Längs- und Umfangsrichtung angeordnet.

Schließlich ist noch ein elektrischer Motor bekannt, bei dem zwei Permanentmagnetpaare in einem Gehäuse so untergebracht sind, daß zwei nebeneinanderliegende Magnete nach Art einer Nut-Feder-Verbindung an einer Längsseite anliegen, während an der anderen Längsseite zweier benachbarter Magnete Schenkel eines federnden Halteteils anliegen. Das über beide Stirnseiten der Permanentmagnete herausragende Halteteil hat in Umfangsrichtung angeformte Lappen, die an die Stirnseiten jeweils zweier benachbarter Magnete gebogen sind. Dabei ist jedoch von Nachteil, daß die Magnete zwischen den Lappen mehr oder weniger eingeklemmt sind, was keinen Ausgleich von Fertigungstoleranzen der Magnetlänge ermöglicht, die Permanentmagnete jedoch beschädigen kann. Die Halteteile ragen noch an einer Seite über die an einer Stirnseite der Permanentmagnete anliegenden Lappen hinaus und enden in einem Halteabschnitt mit seitlichen Schlitzen zur Aufnahme des Bürstenhalters des elektrischen Motors. Bei dem bekannten Motor ist somit auch noch von Nachteil, daß zur Längsfixierung der Permanentmagnete im Gehäuse noch besondere Mittel am Gehäuse vorgesehen werden müssen. Außerdem ist die Verbindung des Bürstenhalters mit den Halteteilen für die Permanentmagnete für den rauhen Betrieb in Kraftfahrzeugen nicht schüttelfest genug.

Der Erfindung liegt daher die Aufgabe zugrunde, eine elektrische Maschine, insbesondere für Andrehvorrichtungen von Brennkraftmaschinen zu schaffen, bei der mindestens zwei Permanentmagnetpaare schüttelsicher, feuchtigkeits- und schmutzdicht sowie wärmebeständig im Gehäuse der elektrischen Maschine angeordnet sind, so daß sie den hohen Anforderungen beim rauhen Betrieb in Kraftfahrzeugen gewachsen sind. Dazu gehört auch eine sichere toleranzausgleichende Befestigung der Permanentmagnetpaare, um die als Andrehmotor dienende elektrische Maschine unabhängig von Temperatureinflüssen und von der Schwingbeschleunigung zu machen.

Diese Aufgabe wird bei einer elektrischen Maschine der eingangs genannten Art durch die kennzeichnenden Merkmale des Anspruchs 1 gelöst.

Durch die in den Unteransprüchen aufgeführten Maßnahmen sind vorteilhafte Weiterbildungen der im Anspruch 1 angegebenen elektrischen Maschine möglich. Besonders vorteilhaft ist es, zumindest die Halteteile aus elastischem Kunststoff auszubilden, durch welche die Befestigungsteile geführt sind, mit welchen Lagerdeckel und Antriebslager am Gehäuse der elektrischen Maschine befestigt sind.

Ausführungsbeispiele der Erfindung sind in der Zeichnung dargestellt. Es zeigt

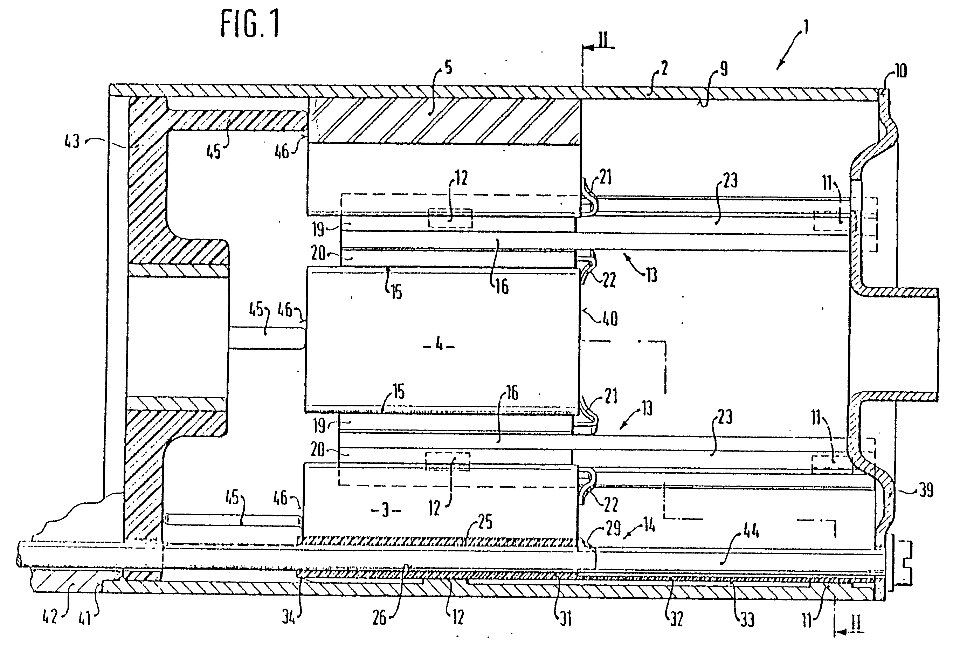

Fig. 1 eine elektrische Maschine im Längsschnitt,

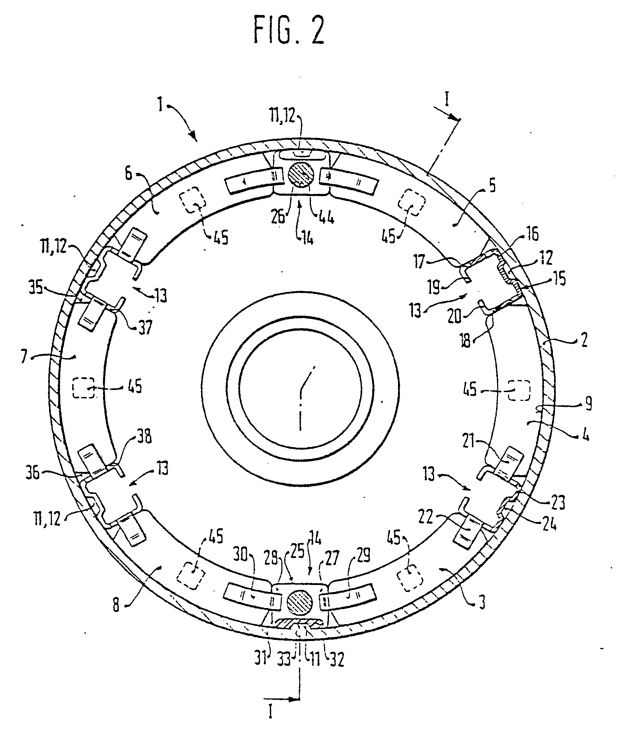

Fig. 2 einen Querschnitt entlang der Linie II-II in Fig. 1,

Fig. 3 die elektrische Maschine mit einer Abwandlung der Halteteile nach Fig. 1, teilweise im Längsschnitt und

Fig. 4 einen Querschnitt entlang der Linie VI-VI in Fig. 3.

Eine Andrehvorrichtung für Brennkraftmaschinen hat einen elektrischen Motor 1 mit einem Gehäuse 2, in dem sechs gewölbte Permanentmagnete 3 bis 8 untergebracht sind. An der Innenwand 9 des Gehäuses 2 sind in einem ersten Bereich nahe seiner Stirnseite 10 und in einem zweiten Bereich in der Mitte der Länge der Magnete 3 bis 8 jeweils sechs im gleichen radialen Abstand angeordnete und in Längsrichtung fluchtende Führungsnasen 11 bzw. 12 ausgebildet. Die Magnete 3 bis 8 liegen zwischen den Führungsnasen 12 an der Innenwand 9 des Gehäuses 2 an mit seitlichem Abstand zu den Führungsnasen 12. Die Magnete 3 bis 8 sind durch federnde Halteteile 13 und 14 befestigt.

Die Halteteile 13 sind aus thermisch beständigem, federndem Blech geformt. Sie haben einen Halteabschnitt 15 mit etwa viereckig gebogenem Querschnitt. An den Boden 16 des Halteabschnitts 15 sind die Seiten des Vierecks bildende Schenkel 17 und 18 angebogen. Die Enden 19 bzw. 20 der Schenkel 17 und 18 sind zueinander gebogen und bilden die geschlitzte vierte Seite des Vierecks. Die Schenkel 17 und 18 sind somit am Boden 16 schwenkbar ausgebildet. Der Halteabschnitt 15 ist etwa so lang wie die Permanentmagnete 3 bis 8. An den Halteabschnitt 15 des Halteteils 13 schließen sich zwei Lappen 21 und 22 an. Sie sind als Verlängerung der Schenkel 17 bzw. 18 jedoch schmaler ausgebildet, rechtwinklig von den Schenkeln 17, 18 weg gebogen und annähernd S-förmig gekröpft. Der Boden 16 ist als Abstandshalter 23 verlängert, welcher weit über den Halteabschnitt 15 an dem die Lappen 21 und 22 aufweisenden Ende hinausragt. In den Boden 16 und den anschließenden Abstandshalter 23 ist eine durchgehende Führungsnut 24 eingearbeitet.

Die Halteteile 14 sind als Spritzteil aus wärmebeständigem, elastischem Kunststoff ausgebildet. Ihr Halteabschnitt 25 hat ebenfalls viereckigen Querschnitt und eine Längsbohrung 26. An einem Ende der Seiten 27 und 28 des Halteabschnitts 25 sind wiederum etwa S-förmige seitliche Lappen 29 und 30 angeformt. Der Boden 31 hat wie seine als Abstandshalter 32 ausgebildete Verlängerung eine Führungsnut 33 an der Außenseite. Die Halteteile 14 sind an ihrem Halteabschnitt 25 mit einer Einführungsschräge 34 versehen.

Die Längsseiten 35 und 36 der Permanentmagnete 3 bis 8 sind jeweils mit einer ebenen Fläche 37 bzw. 38 versehen. Die Flächen 37 und 38 eines Permanentmagneten 3 bis 8 schließen einen spitzen Winkel ein, der etwas kleiner als 60° beträgt. Die Größe des spitzen Winkels hängt im wesentlichen von dem Durchmesser des Gehäuses und der Anzahl der Permanentmagnete ab, die den Gewölbeeffekt zwischen den Permanentmagneten ermöglichen.

Die Halteteile 13 und 14 sind an der Innenwand 9 anliegend in das Gehäuse 2 eingeschoben. Dabei gleiten die Führungsnuten 24 und 33 der Halteteile 13 und 14 an den Führungsnasen 11 und 12 des Gehäuses 2. Die Halteabschnitte 15 und 25 sind zwischen die Längsseiten 35 und 36 jeweils zweier benachbarter Permanentmagnete 3 bis 8 geschoben, wobei ihre Schenkel 17 und 18 bzw. Seiten 27 und 28 unter Federspannung an den ebenen Flächen 37 bzw. 38 der Permanentmagnete 3 bis 8 anliegen. Durch die in den Führungsnuten 24 und 33 greifenden Führungsnasen 11 und 12 sind die Halteteile 13 und 14 und somit die Permanentmagnete 3 bis 8 in ihrer Umfangsrichtung im Gehäuse 2 fixiert. Das Gehäuse 2 ist an seiner Stirnseite 10 mit einem Lagerdeckel 39 abgeschlossen. Am Lagerdeckel 39 liegen die Enden der Abstandshalter 23 und 32 der Halteteile 13 und 14 an. Die Lappen 20 und 21 der Halteteile 13 und die Lappen 29 und 30 der Halteteile 14 liegen an den dem Lagerdeckel 39 zugewandten Stirnseiten 40 jeweils zweier benachbarter Permanentmagnete 3 bis 8 an.

An der anderen Stirnseite 41 des Gehäuses 2 ist ein Antriebslager 42 angeflanscht, in dem an sich bekannter und nicht näher dargestellter Weise ein Einspurgetriebe der Andrehvorrichtung untergebracht ist. Zwischen Gehäusestirnseite 41 und Antriebslager 42 ist ein Zwischenlager 43 eingesetzt. Die an den Stirnseiten 10 und 41 des Gehäuses 2 angeflanschten Lagerdeckel 39 einerseits sowie Zwischenlager 43 und Antriebslager 42 andererseits sind durch Zuganker 44 am Gehäuse 2 befestigt. Die Zuganker 44 sind im Gehäuse 2 durch die Längsbohrungen 26 der Halteteile 14 aus Kunststoff gesteckt. Die Halteteile 14 aus Kunststoff erleichtern das Montieren des verhältnismäßig langen Zugankers 44 aus magnetisierbarem Material.

Am Zwischenlager 43 aus Kunststoff sind an der dem Gehäuse 2 zugewandten Seite in gleichmäßigem Abstand in Umfangsrichtung sechs Vorsprünge 45 angeformt. Sie liegen an der ihnen zugewandten Stirnseite 46 der Permanentmagnete 3 bis 8 an und halten sie in ihrer Längsrichtung im Gehäuse 2 fixiert. Zugleich drücken die Vorsprünge 45 die Permanentmagnete 3 bis 8 toleranzausgleichend gegen die federnden Lappen 21 und 22, 29 und 30 der Halteteile 13 und 14. Somit sind die Permanentmagnete 3 bis 8 im Gehäuse 2 durch die federnden Halteabschnitte 15 und 25 der Halteteile 13 und 14 in Umfangsrichtung unter Ausnutzung des Gewölbeeffekts verspannt sowie zugleich durch die sich am Lagerdeckel 39 abstützenden Abstandshalter 23 und an den Stirnseiten 40 der Permanentmagnete 3 bis 8 federnd anliegenden Lappen 21, 22 bzw. 29, 30 der Halteteile 13 und 14 und der an den Stirnseiten 46 der Permanentmagnete 3 bis 8 anliegenden Vorsprünge 45 des Zwischenlagers 43 toleranzausgleichend in Längsrichtung und schüttelfest im Gehäuse 2 gehalten.

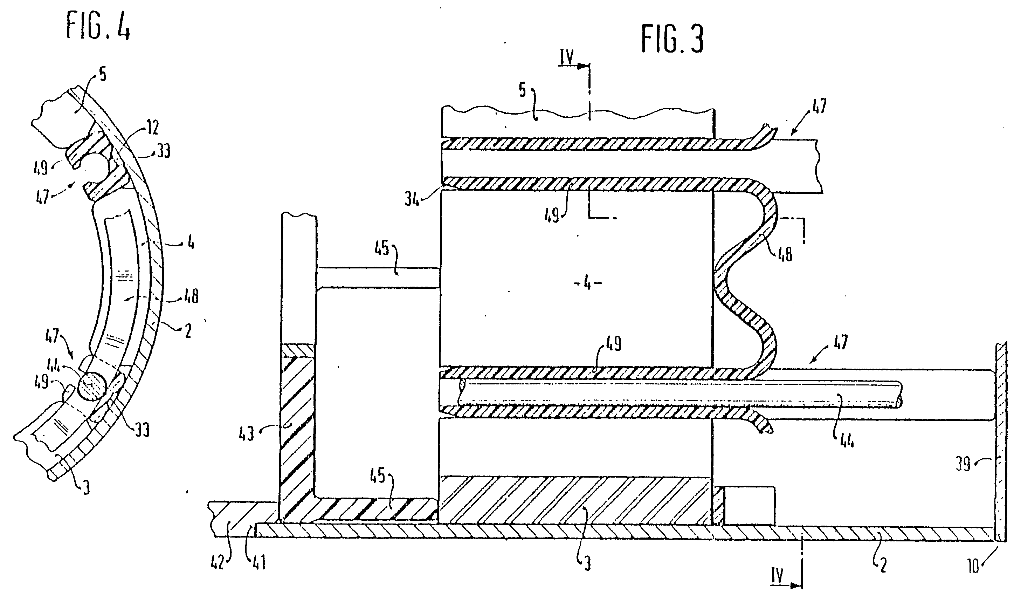

Bei Ausführungen ohne Zwischenlager sind die Vorsprünge 45 an der dem Permanentmagneten 3 bis 8 zugewandten Seite des Antriebslagers 42 ausgebildet. Die abgewandelten Halteteile 47 nach Fig. 3 und 4 für die Permanentmagnete 3 bis 8 sind wie die Halteteile 14 als Spritzteil aus Kunststoff hergestellt. Sie haben an Stelle der S-förmigen Lappen 29 und 30, welche an der Stirnfläche 40 der Permanentmagnete 3 bis 8 anliegen, eine zwei benachbarte Halteteile 47 verbindende etwa W-förmige Dehnschleife 48, die mit ihrem Mittelabschnitt an der Stirnseite 40 des jeweils zwischen zwei Halteteilen 47 liegenden Permanentmagneten 3 bis 8 toleranzausgleichend anliegt. Alle Halteteile 47 sind somit zu einem einzigen montagefreundlichen Haltering für die Permanentmagnete 3 bis 8 zusammengefaßt. Der Halteabschnitt 49 der Halteteile 47 ist geschlitzt ausgebildet, um die notwendige Federwirkung in Umfangsrichtung zu erzielen.

### Patentansprüche

1. Elektrische Maschine, insbesondere für Andrehvorrichtungen von Brennkraftmaschinen, in deren Gehäuse (2) gewölbte Permanentmagnete (3 bis 8) an der Innenwand (9) anliegen und unter Ausnutzung des Gewölbeeffekts mittels mindestens eines an den Längsseiten (35, 36) zweier benachbarter Permanentmagnete anliegenden federnden Halteteils (13) befestigt sind, das anschließend an den an den Längsseiten zweier benachbarter Permanentmagnete anliegenden federnden Halteabschnitt (15) einen Abstandshalter (23) hat, welcher sich an einem an einer Gehäusestirnseite (10) angeordneten Teil (39) abstützt und an den Stirnseiten (40) zweier benachbarter Permanentmagnete federnd anliegende Vorsprünge (21, 22) hat, und die Permanentmagnete mit ihrer anderen Stirnseite (46) an einem Anschlag (43, 45) im Gehäuse (2) anliegen, dadurch gekennzeichnet, daß mindestens zwei Permanentmagnetpaare (3 bis 8) im Gehäuse (2) angeordnet sind, wobei sich zwischen die Permanentmagnete (3 bis 8) nur lösbare Halteteile (13; 14; 47) mit ihren an den Längsseiten (37, 38) jeweils zweier benachbarter Permanentmagnete federnd anliegenden, mit im wesentlichen mit viereckigem Querschnitt geformten Halteabschnitt (15; 25; 49) erstrecken, welche Halteteile (15; 25; 49) an ihrer an der Gehäuseinnenwand (9) anliegenden Seite (16; 31) mit die Permanentmagnete (3 bis 8) im Gehäuse (2) in Umfangsrichtung fixierenden Mitteln (24) ausgebildet sind, und durch zwei der Halteteile (13; 14; 47) lösbare Befestigungsteile (44) für das an einer Gehäusestirnseite (10) als Lagerdeckel (39) angeordnete Teil und das als Anschlag an der anderen Stirnseite (46) der Permanentmagnete (46) der Permanentmagnete (3 bis 8) angeordnete Zwischenlager (43) am Gehäuse (2) geführt sind.

2. Elektrische Maschine nach Anspruch 1, dadurch gekennzeichnet, daß die Halteteile (14; 47) aus elastischem Kunststoff gebildet sind.

3. Elektrische Maschine nach Anspruch 1, dadurch gekennzeichnet, daß die Halteteile (13) aus Metall geformt sind.

4. Elektrische Maschine nach einem der Ansprüche 1 bis 3, dadurch gekennzeichnet, daß die Befestigungsteile (44) durch Halteteile (14) aus elastischem Kunststoff geführt sind und die übrigen Halteteile (13) aus Metall geformt sind.

5. Elektrische Maschine nach einem der Ansprüche 1 bis 4, dadurch gekennzeichnet, daß der federnde Abschnitt (15; 49) der Halteteile (13; 47) an der zur Längsachse der Maschine gewandten Seite offen ist und in an den Längsseiten (37, 38) der benachbarten Permanentmagnet (3 bis 8) eben anliegende Schenkel (17, 18) übergeht, und der der offenen Seite gegenüberliegenden Boden (16; 31) an der Innenwand (9) des Gehäuses (2) geführt ist.

6. Elektrische Maschine nach einem der Ansprüche 1 bis 5, dadurch gekennzeichnet, daß das Halteteil (13; 14; 47) an seinem an der Innenwand (9) des Gehäuses (2) anliegenden Boden (16; 31) eine sich über ganze Länge des Halteteils (13; 14; 47) erstreckende Führungsnut hat.

7. Elektrische Maschine nach Anspruch 1 oder 2, dadurch gekennzeichnet, daß die Halteteile (14) über die an der Stirnseite (40) der Permanentmagnete (3 bis 8) anliegenden Vorsprünge (29, 30) miteinander verbunden sind.

### Claims

1. Electrical machine, especially for starting devices of internal-combustion engines, in the housing (2) of which arched permanent magnets (3 to 8) rest against the inner wall (9) and, with the arch effect being utilised, are fastened by means of at least one resilient retention part (13) which rests against the longitudinal sides (35, 36) of two adjacent permanent magnets and which has, adjoining the resilient retention portion (15) resting against the longitudinal sides of two adjacent permanent magnets, a spacer (23) which is supported on a part (39) located on a spacer (23) which is supported on a part (39) located on a housing end face (10) and which possesses projections (21, 22) resting resiliently against the end faces (40) of two adjacent permanent magnets, the permanent magnets resting against a stop (43, 45) in the housing (2) by means of their other end face (46), characterised in that at least two pairs of permanent magnets (3 to 8) are arranged in the housing (2), only releasable retention parts (13; 14; 47) extending between the permanent magnets (3 to 8) by means of their retention portion (15; 25; 49) resting resiliently against the longitudinal sides (37, 38) of two particular adjacent permanent magnets and being formed with an essentially square cross-section, which retention parts (15; 25; 49) are designed, on their side (16; 31) resting against the inner wall (9) of the housing, with means (24) fixing the permanent magnets (3 to 8) in the housing (2) in the circumferential direction, and releasable fastening parts (44) for the part located on one housing end face (10) as a bearing cover (39) and for the intermediate bearing (43) on the housing (2) arranged as a stop on the other end face (46) of the permanent magnets (3 to 8) are guided through two of the retention parts (13; 14; 47).

2. Electrical machine according to Claim 1, characterised in that the retention parts (14; 47) are formed from elastic plastic.

3. Electrical machine according to Claim 1, characterised in that the retention parts (13) are formed from metal.

4. Electrical machine according to one of Claims 1 to 3, characterised in that the fastening parts (44) are guided by retention parts (14) made of elastic plastic, and the remaining retention parts (13) are formed from metal.

5. Electrical machine according to one of Claims 1 to 4, characterised in that the resilient portion (15; 49) of the retention parts (13; 47) is open on the side facing the longitudinal axis of the machine and merges into legs (17, 18) resting flat against the longitudinal sides (37, 38) of the adjacent permanent magnets (3 to 8), and the bottom (16; 31) located opposite the open side is guided on the inner wall (9) of the housing (2).

6. Electrical machine according to one of Claims 1 to 5, characterised in that the retention part (13; 14; 47) has, on its bottom (16, 31) resting against the inner wall (9) of the housing (2), a guide groove extending over the entire length of the retention part (13; 14; 47).

7. Electrical machine according to Claim 1 or 2, characterised in that the retention parts (14) are connected to one another via the projections (29, 30) resting against the end face (40) of the permanent magnets (3 to 8).

**Revendications**

1. Machine électrique notamment pour des dispositifs de démarrage de moteurs à combustion interne, dans le boîtier (2) de laquelle des aimants permanents cintrés (3 à 8) sont appliqués à la paroi interne (9) et sont fixés en utilisant l'effet de cintrage au moyen d'au moins une pièce de maintien (13) s'appliquant élastiquement sur les côtés longitudinaux (35, 36) de deux aimants permanents voisins, cette pièce comportant une entretoise (23) se raccordant à la partie de maintien (15) s'appuyant élastiquement aux côtés longitudinaux de deux aimants permanents voisins, cette entretoise prenant appui sur une pièce (39) disposée sur une face frontale (10) du boîtier et comportant des saillies (21, 22) s'appliquant élastiquement sur les faces frontales (40) de deux aimants permanents voisins, tandis que les aimants permanents s'appliquent par leur autre face frontale (46) sur une butée (43, 45) dans le boîtier (2), machine caractérisée en ce qu'au moins deux paires d'aimants permanents (3 à 8) sont disposées dans le boîtier (2), tandis qu'entre les aimants permanents (3 à 8) s'étendent uniquement des pièces de maintien amovibles (13; 14; 47) avec leurs parties de maintien (15; 25; 49), de section transversale en pratique quadrangulaire, s'appliquant élastiquement sur les côtés longitudinaux (37, 38) de respectivement deux aimants permanents voisins, ces pièces de maintien (15; 25; 49) étant équipées sur leurs faces (16; 31) s'appliquant sur la paroi interne (9) du boîtier par des moyens (24) fixant en direction périphérique les aimants permanents (3 à 8) dans le boîtier (2), et des pièces de fixation amovibles (44) pour la pièce disposée sur une face frontale (10) du boîtier et jouant le rôle de flasques de paliers (39) et pour le palier intermédiaire (43) disposé sur le boîtier (2) comme butée contre l'autre face frontale (46) des aimants permanents (3 à 8), passent à travers deux des pièces de maintien (13; 14; 47).

2. Machine électrique selon la revendication 1, caractérisé en ce que les pièces de maintien (14; 47) sont constituées d'une matière plastique élastique.

3. Machine électrique selon la revendication 1, caractérisé en ce que les pièces de maintien (13) sont façonnées en métal.

4. Machine électrique selon une des revendications 1 à 3, caractérisé en ce que les pièces de fixation (44) passent à travers des pièces de maintien (14) en matière plastique élastique, tandis que les autres pièces de maintien (13) sont façonnées en métal.

5. Machine électrique selon une des revendications 1 à 4, caractérisé en ce que la partie élastique (15; 49) des pièces de maintien (13; 47) est ouverte sur son côté tourné vers l'axe longitudinal de la machine et se prolonge par les ailes (17, 18) s'appliquant sur les côtés longitudinaux (37, 38) des aimants permanents voisins (3 à 8), tandis que le fond (16; 31) opposé au côté ouvert, est guidé contre la paroi interne (9) du boîtier (2).

6. Machine électrique selon une des revendications 1 à 5, caractérisé en ce que la pièce de maintien (13; 14; 47) comporte sur son fond (16; 31), s'appliquant contre la paroi interne (9) du boîtier (2), une rainure de guidage s'étendant sur la totalité de la longueur de la pièce de maintien (13; 14; 47).

7. Machine électrique selon revendication 1 ou 2, caractérisé en ce que les pièces de maintien (14) sont reliées entre elles par l'intermédiaire des saillies (29, 30) s'appliquement sur les faces frontales (40) des aimants permanents (3 à 8).

FIG.1

# FIG. 2

FIG. 4

FIG. 3

IV

0 067 164